# EUROPEAN PATENT APPLICATION

(11) **EP 4 640 329 A1**
(43) Date of publication of application: **29.10.2025**
(21) Application number: 23907721.7
(22) Date of filing: 20.12.2023
(51) Int. Cl.: B21B 37/76, G06N 20/20, G06N 3/08

(54) **MATERIAL CONTROL SYSTEM FOR COLD ROLLED STEEL SHEETS AND METHOD FOR GENERATING MATERIAL PREDICTION MODEL FOR COLD ROLLED STEEL SHEETS**

(30) Priority: 21.12.2022 KR 20220180805
(71) Applicant: POSCO Co., Ltd, Pohang-si, Gyeongsangbuk-do 37859 (KR)
(72) Inventor: PARK, Jun-Ho, Gwangyang-si, Jeollanam-do 57807 (KR); HAN, Tae-Kyo, Gwangyang-si, Jeollanam-do 57807 (KR); RYU, Joo-Hyun, Gwangyang-si, Jeollanam-do 57807 (KR); CHO, Kyoung-Rae, Seoul 06194 (KR); LEE, Kyoo-Young, Gwangyang-si, Jeollanam-do 57807 (KR)
(74) Representative: Meissner Bolte Partnerschaft mbB
(86) International application number: PCT/KR2023/021088
(87) International publication number: WO 2024/136438

(57) **Abstract**

A material control system for cold rolled steel sheets, according to an embodiment of the present invention, comprises: a programmable logic controller that obtains process data about already produced cold rolled steel sheets; a process controller that controls a manufacturing process of cold rolled steel sheets according to the process data from the programmable logic controller; a model generation unit that learns a set of learning data in advance and generates a prediction model for predicting a widthwise material of a cold rolled steel sheet to be produced; and a production management system that transmits and receives information to and from the process controller, receives a prediction value from the prediction model generated by the model generation unit, and manages production of the cold rolled steel sheet. A method for generating a material prediction model for cold rolled steel sheets, according to an embodiment of the present invention, comprises the steps of: generating, by a model generation unit, a set of learning data; and training a preset model with the set of learning data to generate a prediction model for predicting a widthwise material of a cold rolled steel sheet, wherein a plurality of pieces of data included in the set of learning data include: hot rolling process data from among process data provided from a programmable logic controller; material data and composition data provided from a production management system; and data mapping measurement positions between cold rolling process data and annealing process data from among the process data from the programmable logic controller, and the process data provided from the programmable logic controller may be process data about the produced cold-rolled steel sheet, which is obtained in advance by a sensor.

## Description

### Technical Field

The present disclosure relates to a material control system for cold rolled steel sheets and a method for generating a material prediction model for cold rolled steel sheets.

### Background Art

Recently, respective countries around the world have come up with strict policies on various environmental regulations such as CO₂ emission restrictions and energy usage regulations. Accordingly, improvement of fuel efficiency and durability may be important issues which automobile companies need to address. To this end, by using a high-strength steel having a reduced thickness, various issues related to the environment, fuel efficiency, collision resistance, and durability may be addressed simultaneously. High-strength steel has been continuously developed to reduce a weight of a vehicle body, but in order to implement high-strength steel, the content of components such as C, Mn, and Si has increased. However, as the content of components in the steel increases, material sensitivity (material change) in relation to the process temperature change may increase, such that a material deviation within the coil may become more severe as high-strength steel of the giga level is used. When a material deviation occurs, a springback deviation may occur within a coil during molding by customers, and accordingly, molding quality may degrade continuously.

(Cited document 1) Korean Registered Patent Publication No. 10-0858902

### Detailed description of present disclosure

### Technical problems to solve

An aspect of the present disclosure is to provide a material control system for cold rolled steel sheets and a method for generating a material prediction model for cold rolled steel sheets, which may predict a material according to an entire width of a cold rolled steel sheet using artificial intelligence.

### Solution to Problem

An aspect of the present disclosure provides a material control system for cold rolled steel sheets includes a programmable logic controller configured to obtain process data of a cold rolled steel sheet already produced; a process controller configured to control a process of manufacturing a cold rolled steel sheet according to process data of the programmable logic controller; a model generation unit configured to learn a leaning data set in advance and to generate a prediction model predicting a material in a width direction of the cold rolled steel sheet to be produced; and a manufacturing execution system configured to transmit information to and receive information from the process controller, to receive a prediction value of the prediction model generated by the model generation unit and to manage production of the cold rolled steel sheet, wherein the leaning data set includes hot rolling process data included in process data from the programmable logic controller; material data and component data from the manufacturing execution system; and data obtained by mapping a measurement position between cold rolling and annealing process data included in process data from the programmable logic controller.

An aspect of the present disclosure provides a method for generating a material prediction model for cold rolled steel sheets includes an operation of generating a leaning data set by a model generation unit; and an operation of training a preset model with the leaning data set and generating a prediction model for predicting a material in a width direction of a cold rolled steel sheet, wherein a plurality of pieces of data included in the leaning data set include hot rolling process data included in process data provided from a programmable logic controller; material data and component data provided from a manufacturing execution system; and data obtained by mapping a measurement position between cold rolling and annealing process data included in process data from the programmable logic controller, and wherein process data provided by the programmable logic controller is process data of a produced cold rolled steel sheet, obtained by a sensor in advance.

### Advantageous Effects of Invention

According to an aspect of the present disclosure, there may be the effect that precise and accurate prediction ability may be exhibited, and factors reducing production capacity, such as mold modification and molding condition change depending on a plate part in a coil during molding may be addressed.

### Brief Description of Drawings

FIG. 1 may be a diagram illustrating a material control system for cold rolled steel sheets according to an embodiment of the present disclosure.

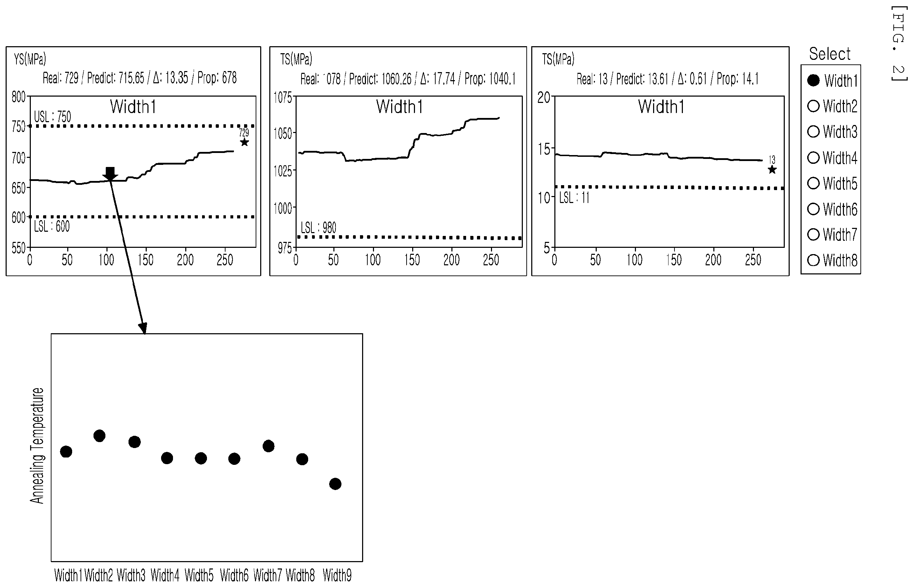

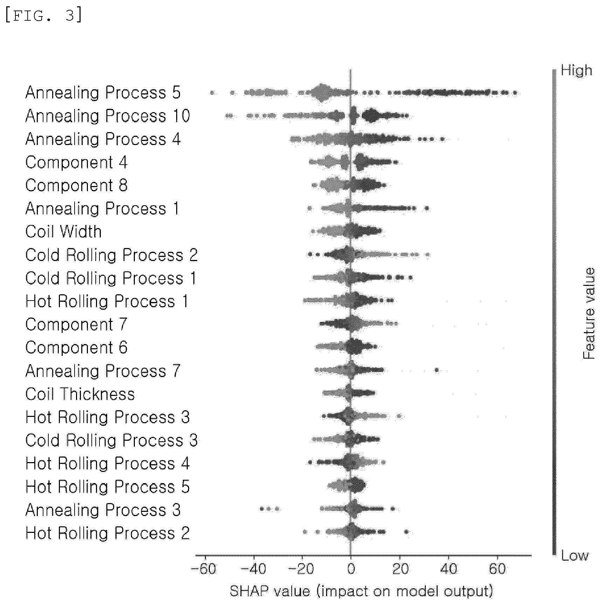

FIG. 2 may be a diagram illustrating process data detected in a material control system for cold rolled steel sheets according to an embodiment of the present disclosure, and FIG. 3 may be an analysis result representing which variable among X variables (process variables) was more importantly considered in deriving a prediction value from prediction values calculated from a model generated by the material control system for cold rolled steel sheets according to an embodiment of the present disclosure and the method for generating a material prediction model for cold rolled steel sheets according to an embodiment of the present disclosure.
FIG. 4 is a flowchart illustrating a method for generating a material prediction model for cold rolled steel sheets according to an embodiment of the present disclosure.
FIG. 5 is a diagram illustrating learning data variables of a method for generating a material prediction model for cold rolled steel sheets according to an embodiment of the present disclosure.
FIGS. 6 and 7 are diagrams illustrating weight setting of a method for generating a material prediction model for cold rolled steel sheets according to an embodiment of the present disclosure.
FIG. 8 is a drawing illustrating an exemplary computing environment in which a material control system for cold rolled steel sheets according to an embodiment of the present disclosure may be implemented.

### Best Mode for Invention

Hereinafter, a preferred embodiment may be described in detail such that a person having ordinary knowledge in the technical field to which the present disclosure belongs may easily carry out the present disclosure with reference to the attached drawings.

First, as for a material control system for cold rolled steel sheets and a method for generating a material prediction model for cold rolled steel sheets according to an embodiment of the present disclosure, a cold rolled steel sheet, for example, in the case of an automobile cold rolled steel sheet, a steel slab including components, by weight%, C: 0.001-0.4%, Si: 0.1-2.5%, Mn: 1-3%, Al: 0.1% or less, Cr: 1.0% or less, Ti: 0.2% or less, Nb: 0.1% or less, V: 0.2% or less, Mo: 0.5% or less, B: 30ppm or less, and a balance of Fe and inevitable impurities, may be manufactured and heated. This may be to smoothly perform a subsequent hot-rolling process and to obtain a target material, and it may be preferable to heat in a temperature range of 1100-1300°C. Hot-rolling may be performed as finish-rolling performed after rough rolling, and after finish-rolling, coiling (CT) operation may be performed, and a cooling process may be performed until the operation. The coiled hot-rolled steel sheet as above may be cold-rolled at a constant reduction ratio at room temperature, thereby manufacturing a cold rolled steel sheet. It may be preferable to continuously anneal the steel sheet after the cold rolling. The continuous annealing may include a heating section (HS), a soaking section (SS), a slow cooling section (SCS), a rapid cooling section (RCS), a reheating section (RHS), an overaging section (OAS), and a final cooling section (FCS).

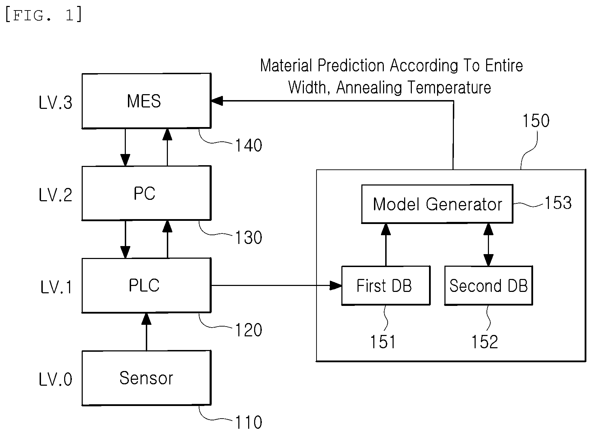

FIG. 1 may be a diagram illustrating a material control system for cold rolled steel sheets according to an embodiment of the present disclosure.

Referring to FIG. 1, a material control system for cold rolled steel sheets according to an embodiment of the present disclosure may include a sensor 110, a programmable logic controller (PLC) 120, a process controller (PC) 130, a manufacturing execution system (MES) 140, and a model generation unit 150.

The sensor 110 may be disposed in each of the above-described processes of manufacturing a cold rolled steel sheet and may detect process data, the programmable logic controller 120 may obtain process data from the sensor 110 and transmit the data to the process controller 130, and the process controller 130 may communicate with the manufacturing execution system 140 and may control the manufacturing execution system 140 and may control the programmable logic controller 120 according to the obtained process data, thereby controlling the above-described process of manufacturing a cold rolled steel sheet. The programmable logic controller 120 may transmit the process data obtained from the sensor 110 to the model generation unit 150.

The model generation unit 150 may generate a leaning data set according to the process data, may train a preset model and may generate a prediction model for predicting a material according to the width direction (entire width) of the cold rolled steel sheet.

The model generation unit 150 may include first and second databases (DB) 151, 152 and a model generator 153.

FIG. 2 may be a diagram illustrating process data detected in a material control system for cold rolled steel sheets according to an embodiment of the present disclosure, and FIG. 3 may be an analysis result representing which variable among X variables (process variables) was more importantly considered in deriving a prediction value from prediction values calculated from a model generated by the material control system for cold rolled steel sheets according to an embodiment of the present disclosure and the method for generating a material prediction model for cold rolled steel sheets according to an embodiment of the present disclosure.

Referring to FIG. 2, the illustrated process data may be data obtained by measuring yield strength (YP), tensile strength (TS) and elongation (EL) in the width direction of the cold rolled steel sheet.

The learning data may be selected as factors greatly affecting the material, and the component data may be loaded for each cold rolled steel sheet coil, and the data with respect to the width direction (entire width) in the hot rolling and cold rolling and annealing processes may be stored in the first database 151. Referring to FIG. 2, more specifically, the temperature immediately before hot finish-rolling (FET), the temperature immediately after hot finish-rolling (FDT) and the coiling temperature (CT) may be measured and collected, and these data in the width direction may be used as learning data as hot rolling process data. As for the hot rolling process data, data may be collected at equal intervals, for example, within 10 m, over the entire width of the coil.

When data between the hot rolling process and the subsequent cold rolling annealing process are linked, consistency of the material prediction model may be better than when each of variables of the hot rolling process are used as an average value in each process as indicated in Table 1 below. In other words, the prediction consistency may be better when data of the material measurement section, rather than the average value of the entire width, is employed for the hot rolling-related variables.

**[Table 1]**

| How to use hot rolling data | RMSE (MPa) |
|---|---|
| Entire width average value | 35.0 |
| Data of material measurement region | 26.8 |

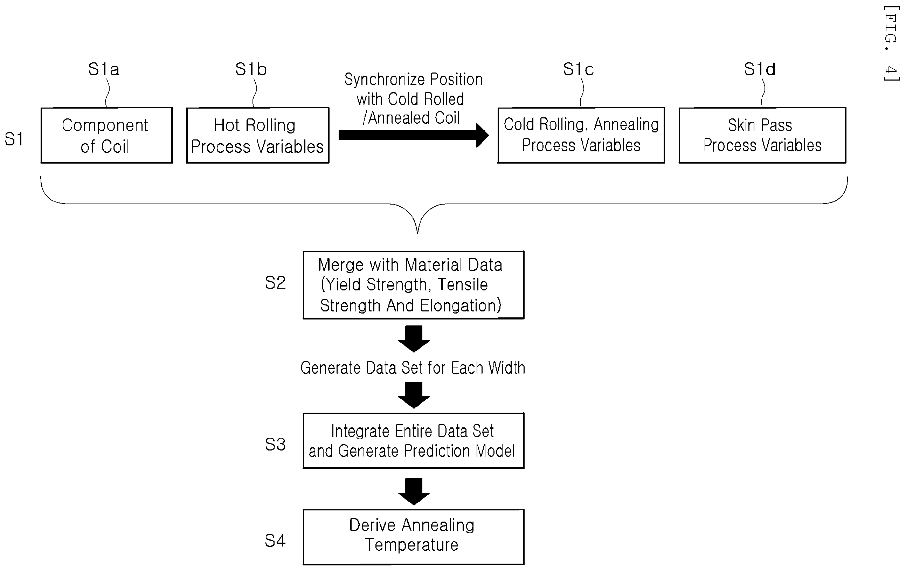

FIG. 4 is a flowchart illustrating a method for generating a material prediction model for cold rolled steel sheets according to an embodiment of the present disclosure.

Referring to FIGS. 1 and 4, a model generator 153 may generate a leaning data set based on the process data stored in the first database 151. The model generator 153 may query the process data stored in the first database 151 (S1), may merge the data with the material data (S2), may generate a leaning data set, and may train a preset model, thereby generating a prediction model (S3).

First, an operation of generating the learning data may include an operation (S1a) of querying the coil component data of the slab, an operation of querying width-direction hot rolling process variables (S1b), an operation of querying cold rolling and annealing process data (S1c), and an operation of querying skin pass process data (S1d). Since the coil dimension changes significantly between the hot rolling process and the cold rolling process, a measurement position mapping work between the hot rolling data and the cold rolling/annealing data may be necessary. Accordingly, the data may be extended by the length due to cold rolling in the hot rolling data and may be merged with the cold rolling and annealing data.

Specifically, as for the cold rolling-related data, first, the roll force data generated during cold rolling may be measured and collected, and the steel sheet passing speed in the continuous annealing furnace from the heating section to the final cooling zone may be measured and collected. Since the lengths of the hot rolled steel sheet and the cold rolled steel sheet are different, an operation of position mapping each data of hot rolling/cold rolling and annealing may be further performed.

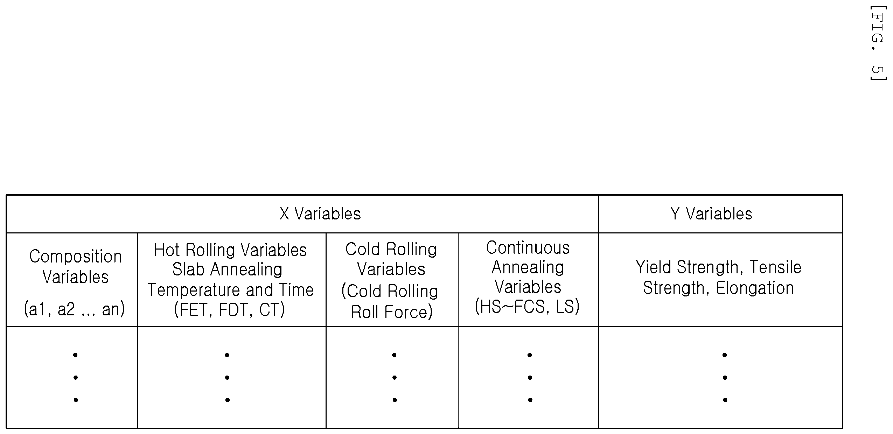

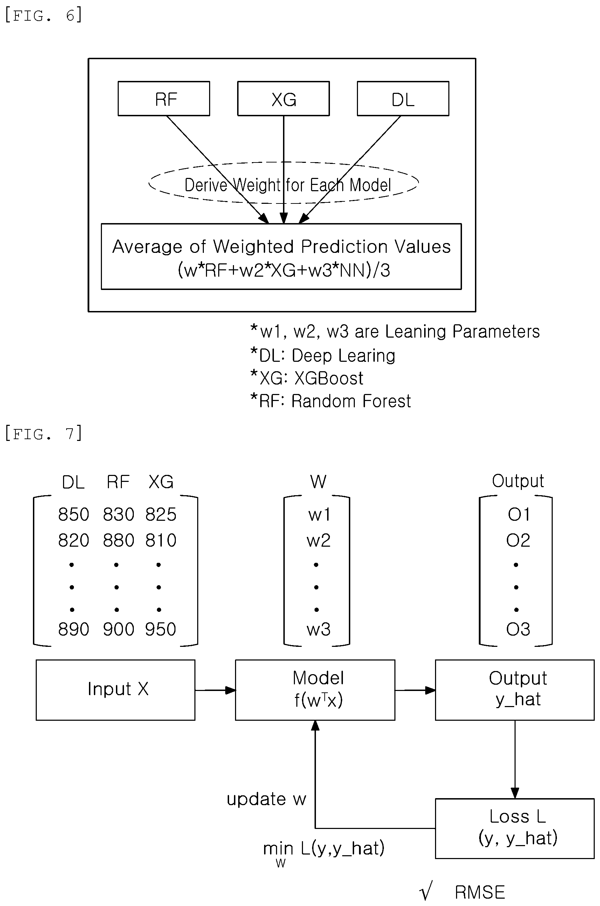

FIG. 5 is a diagram illustrating learning data variables of a method for generating a material prediction model for cold rolled steel sheets according to an embodiment of the present disclosure. FIGS. 6 and 7 are diagrams illustrating weight setting of a method for generating a material prediction model for cold rolled steel sheets according to an embodiment of the present disclosure.

First, referring to FIG. 5 together with FIG. 1, an operation of querying measured and collected data from the first database 151 to the model generator 153 may be included, which may be data for process variables and may correspond to X data in the model. Output, that is, data for Y, may be a material measurement value and may correspond to yield strength, tensile strength, and elongation. For each coil, the process variables mentioned above may be stored in the second database 152. Information on newly produced coils may be periodically stored (for the variables mentioned above) in the second database 152, and the period may be 1 week to 1 month. As mentioned above, the learning data stored as the second database 152 may be requeried with the model generator 153 and an outlier removal logic may be applied to the data retrieved. The outlier removal logic may be used to exclude data below or above the 1st or 3rd quartiles based on the commonly used 1.5*IQR (Interquartile Range) standard, or may have a function of filtering out error data during data collection.

As illustrated in FIG. 5, training and test sets may be created separately for X, Y pairs in the generated learning data, and model training may be performed only on the training data. The trained model may be evaluated through the test set, and the means for evaluating consistency of the model may be a root mean square error (RMSE) and a mean absolute percentage error (MAPE).

Referring to FIG. 5 together with FIG. 1 and FIG. 4, the generated data may be merged with material data (output variables), a leaning data set may be formed, and the preset model of the model generator 153 may be trained. The model may be an ensemble model between a neural network algorithm consisting of 3 hidden layers and a machine learning technique, XGBoost, and a random forest algorithm. The form of the learning data may be formed as a table as illustrated in FIG. 5 for each width direction. By obtaining material values by width direction, models may be individually formed by width direction using process data and material data in the width direction, and a prediction model may be generated by using the leaning data set (S3).

More specifically, regression models may be generated using a XGBoost algorithm, random forest algorithm, and neural network algorithm using learning data, and the average of the output values derived (predicted) from each model may be used as a final prediction value. When using such a model, consistency may be improved by 10% or more as compared to the prior art. More specifically, a steel type having yield strength of 1000 MPa may be as in Table 2 below. (Example of yield strength prediction performance)

Also, referring to FIGS. 6 and 7 along with FIGS. 1 and 2, when ensembling the XGBoost algorithm, random forest algorithm, and neural network algorithm, and the weights of the model are different, model consistency may be improved. The logic in this case may be to derive the weights of each model through the gradient boosting technique, which may be to assign random weights initially and to perform training as in FIG. 7 until the RMSE decreases. Here, when a value of 1 is entered for each model when initializing the weights, the learning speed may be further improved.

**[Table 2]**

| | XGBoost | Random forest | Neural network | Ensembled model of 3 models (weight 1) | Ensembled model of 3 models (add weight model) |
|---|---|---|---|---|---|
| RMSE(MPa) | 29 | 31 | 24 | 26.8 | 21.2 |
| MAPE(%) | 3.1 | 3.0 | 2.5 | 1.0 | 0.6 |

Lastly, the model generator 153 may include an operation (S4) of deriving an optimal annealing temperature for finding a target material through a particle swarm optimization (PSO) algorithm based on a prediction model.

That is, when the above-described prediction model is completed, the subsequent operation may be of creating a model for deriving an annealing temperature among X variables for obtaining a target material based on the prediction model. More specifically, the operation may be of finding the annealing temperature by setting the components, hot rolling variables, and cold rolling variables as fixed variables and only the annealing temperature as a variable. The annealing temperature variable may use one or more variables as dummy variables. In this case, the algorithm may find an optimal annealing temperature based on particle swarm optimization. The total-length data of the hot rolling to the annealing to be used may be, for example, 100 to 2000 per coil (may vary depending on the coil production length and production speed), and the optimal annealing instruction value may be derived for each point (i.e., data) of the entire width of the coil. Accordingly, the material deviation caused by the hot rolling process may be reduced by setting the annealing temperature differently depending on the entire width in a continuous annealing furnace, and a more stable material may be secured by matching the median value of the material specification. The annealing temperature value may be provided for each point of the entire width as indicated in FIG. 5. When the optimal annealing temperature is derived as above, this value may be stored in the second database 152, and the optimal annealing temperature value stored in the second database 152 may be transmitted to the manufacturing execution system 140. The optimal annealing temperature transmitted to the manufacturing execution system 140 may be reflected as a factory design value.

This operation may form a prediction model and an optimal annealing temperature derivation model for each of points spaced apart from each other at a preset distance along the width direction, for example, 5 to 15 points.

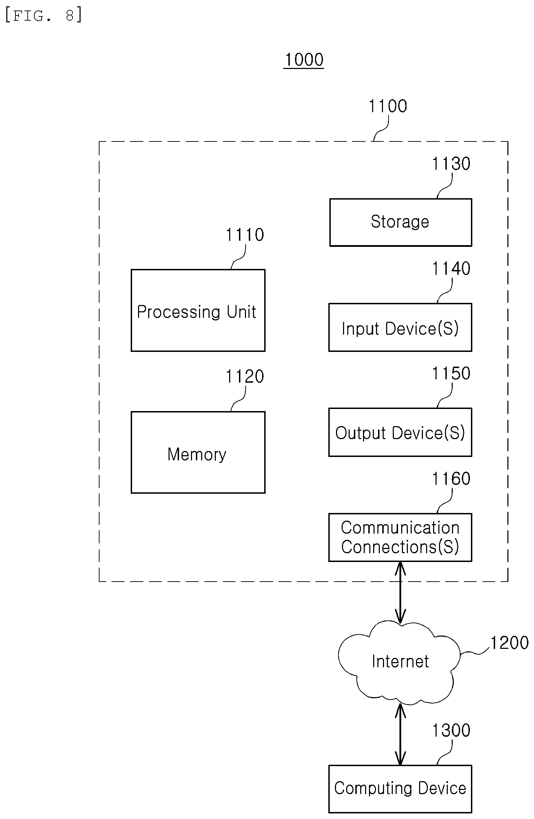

FIG. 8 may be a drawing illustrating an exemplary computing environment in which a material control system for cold rolled steel sheets according to an embodiment of the present disclosure may be implemented.

FIG. 8 may illustrate an example of a system 1000 including a computing device 1100 configured to implement a material control system for cold rolled steel sheets according to an embodiment of the present disclosure. For example, the computing device 1100 may include a personal computer, a server computer, a handheld or laptop device, a mobile device (e.g., a mobile phone, a PDA, a media player, or the like), a multiprocessor system, a consumer electronic device, a minicomputer, a mainframe computer, a distributed computing environment including the aforementioned systems or devices, and the like, but an embodiment thereof is not limited thereto.

The computing device 1100 may include at least one processing unit 1110 and memory 1120. Here, the processing unit 1110 may include, for example, a central processing unit (CPU), a graphics processing unit (GPU), a microprocessor, an application specific integrated circuit (ASIC), a field programmable gate array (FPGA), or the like, and may have a plurality of cores. The memory 1120 may be implemented as a volatile memory (e.g., RAM, or the like), a non-volatile memory (e.g., ROM, flash memory, or the like), or a combination thereof.

Also, the computing device 1100 may include an additional storage 1130. The storage 1130 may include, but is not limited to, magnetic storage, optical storage, or the like. The storage 1130 may store computer-readable instructions for implementing one or more embodiments disclosed herein, and may also store other computer-readable instructions for implementing an operating system, application programs, or the like. Computer readable instructions stored in storage 1130 may be loaded into the memory 1120 for execution by the processing unit 1110.

Also, the computing device 1100 may include input device(s) 1140 and output device(s) 1150. Here, the input device(s) 1140 may include, for example, a keyboard, a mouse, a pen, a voice input device, a touch input device, an infrared camera, a video input device, or other input device. Also, the output device(s) 1150 may include, for example, one or more displays, speakers, printers, or other output devices. Also, the computing device 1100 may use input devices or output devices provided in another computing device as the input device(s) 1140 or the output device(s) 1150.

Also, the computing device 1100 may include communication connections(s) 1160 which enable the computing device 1100 to communicate with other devices (e.g., computing device 1300) through a network such as the Internet 1200. Here, the communication connections(s) 1160 may include a modem, a network interface card (NIC), an integrated network interface, a radio frequency transmitter/receiver, an infrared port, a USB connection, or other interfaces for connecting the computing device 1100 to other computing devices. Also, the communication connections(s) 1160 may include wired connections or wireless connections.

The components of the computing device 1100 described above may be connected by various interconnections (e.g., peripheral component interconnection (PCI), USB, firmware (IEEE 1394), optical bus structure, or the like) such as buses, or may be interconnected by networks.

The terms such as "programmable logic controller (PLC)," "process controller (PC)," "manufacturing execution system (MES)," or the like, as used herein, may generally refer to a computer-related object which may be hardware, a combination of hardware and software, software, or software in execution. For example, a component such as "programmable logic controller (PLC)," "process controller (PC)," "manufacturing execution system (MES)," or the like, may be a process running on a processor, a processor, an object, an executable, a thread of execution, a program, and/or a computer, but an embodiment thereof is not limited thereto. For example, both an application running on a controller and the controller may be components. One or more components may be present within a process and/or thread of execution, and the component may be localized on one computer or distributed between two or more computers.

As described above, according to the present disclosure, since the AI model was utilized, a wider range and larger amount of data may be used than the existing physical model, which exhibits more precise and accurate prediction ability. Also, due to the configuration of the online model, the system may operate continuously from data generation to calculation, which may contribute to implementation of a smart factory. Also, in the case of a cold rolled product, the hot rolling process may be in the preferential process, and since the data for each position in the coil matches in a penetrating manner for all processes from hot rolling to cold rolling, a more accurate prediction model may be provided. Also, according to the configuration of the present disclosure as described above, material information for the entire width may be obtained as in FIG. 2, and the cause of the material difference for each position in the coil may be identified. By providing such total-length material data, factors which may reduce production capacity, such as mold modification and molding condition changes according to the plate part in the coil during molding, may be addressed.

The present disclosure described above is not limited by the aforementioned embodiments and accompanying drawings, but is limited by the scope of the claims described below, and a person skilled in the art in the technical field to which the present disclosure belongs may easily understand that the components of the present disclosure may be variously changed and modified within a scope not deviating from the technical idea of the present disclosure.

## Claims

1. A material control system for cold rolled steel sheets, the material control system comprising:
a programmable logic controller configured to obtain process data of a cold rolled steel sheet already produced;
a process controller configured to control a process of manufacturing a cold rolled steel sheet according to process data of the programmable logic controller;
a model generation unit configured to learn a leaning data set in advance and to generate a prediction model predicting a material in a width direction of the cold rolled steel sheet to be produced; and
a manufacturing execution system configured to transmit information to and receive information from the process controller, to receive a prediction value of the prediction model generated by the model generation unit and to manage production of the cold rolled steel sheet,
wherein the leaning data set includes:
hot rolling process data included in process data from the programmable logic controller;
material data and component data from the manufacturing execution system; and
data obtained by mapping a measurement position between cold rolling and annealing process data included in process data from the programmable logic controller.

2. The material control system of claim 1, wherein the model generation unit extends data by a length extended by cold rolling in the hot rolling process data, merges the data with the cold rolling and annealing process data and corrects the leaning data set.

3. The material control system of claim 1, wherein data obtained by the programmable logic controller includes material data measured at preset intervals in the width direction of the cold rolled steel sheet.

4. The material control system of claim 3, wherein the model generation unit generates the prediction model by the schedule unit in which the material data is measured in the width direction of the cold rolled steel sheet.

5. The material control system of claim 1, wherein the model generation unit further generates an annealing temperature derivation model configured to derive an optimal annealing temperature for finding a target material through a preset particle swarm optimization (PSO) algorithm based on the prediction model, and the manufacturing execution system controls an annealing temperature of the cold rolled steel sheet by controlling the process controller according to the optimal annealing temperature of the annealing temperature derivation model.

6. The material control system of claim 1, wherein the model generation unit generates the prediction model including a preset XGboost algorithm, a random forest algorithm and a neural network algorithm, averages prediction values of the XGBoost algorithm, the random forest algorithm, and the neural network algorithm of the prediction model, and outputs a final prediction value.

7. The material control system of claim 6, wherein the model generation unit provides a weight to a prediction value of each of the XGBoost algorithm, the random forest algorithm and the neural network algorithm of the prediction model according to preset gradient boosting.

8. A method for generating a material prediction model for cold rolled steel sheets, the method comprising:
an operation of generating a leaning data set by a model generation unit; and
an operation of training a preset model with the leaning data set and generating a prediction model for predicting a material in a width direction of a cold rolled steel sheet,
wherein a plurality of pieces of data included in the leaning data set include hot rolling process data included in process data provided from a programmable logic controller; material data and component data provided from a manufacturing execution system; and data obtained by mapping a measurement position between cold rolling and annealing process data included in process data from the programmable logic controller, and
wherein process data provided by the programmable logic controller is process data of a produced cold rolled steel sheet, obtained by a sensor in advance.

9. The method of claim 8, wherein the operation of generating the leaning data set includes extending data by a length extended by cold rolling in the hot rolling process data, merging the data with the cold rolling and annealing process data, and correcting the leaning data set, by the model generation unit.

10. The method of claim 8, wherein, in the operation of generating the leaning data set, data obtained by the programmable logic controller from the sensor includes material data measured at preset intervals in the width direction of the cold rolled steel sheet.

11. The method of claim 10, wherein the operation of generating the prediction model includes generating, by the model generation unit, the prediction model by the schedule unit in which the material data is measured in the width direction of the cold rolled steel sheet.

12. The method of claim 8, further comprising:
an operation of generating, by the model generation unit, an annealing temperature derivation model for deriving an optimal annealing temperature for finding a target material through a preset particle swarm optimization (PSO) algorithm based on the prediction model, and an operation of controlling, by the manufacturing execution system, an annealing temperature of the cold rolled steel sheet by controlling a process controller according to the optimal annealing temperature of the annealing temperature derivation model.

13. The method of claim 8, wherein the operation of generating the prediction model includes generating, by the model generation unit, the prediction model including a preset XGBoost algorithm, a random forest algorithm and a neural network algorithm, averaging prediction values of the XGBoost algorithm, the random forest algorithm, and the neural network algorithm of the prediction model and outputting a final prediction value.

14. The method of claim 13, wherein the operation of generating the prediction model includes providing, by the model generation unit, a weight to a prediction value of each of the XGBoost algorithm, the random forest algorithm and the neural network algorithm of the prediction model according to preset gradient boosting.
